# EUROPEAN PATENT APPLICATION

(11) **EP 2 037 462 A1**
(43) Date of publication of application: **18.03.2009**
(21) Application number: 07768259.9
(22) Date of filing: 29.06.2007
(51) Int. Cl.: H01B 1/12, C08J 3/07, H01M 4/86, H01M 8/10, H01G 9/035, H01G 9/038

(54) **POLYMER ELECTROLYTE EMULSION AND USE THEREOF**

(30) Priority: 04.07.2006 JP 2006184242; 04.07.2006 JP 2006184243
(71) Applicant: Sumitomo Chemical Company, Limited, Tokyo 104-8260 (JP)
(72) Inventor: KURODA, Ryuma, Niihama-shi Ehime 792-0017 (JP); SAITO, Shin, Tsukuba-shi Ibaraki 305-0005 (JP); KURITA, Hiroyuki, Tsukuba-shi Ibaraki 305-0821 (JP); MASUI, Kentaro, Tsukuba-shi Ibaraki 305-0821 (JP)
(74) Representative: Henkel, Feiler & Hänzel
(86) International application number: PCT/JP2007/063526
(87) International publication number: WO 2008/004644

(57) **Abstract**

Provided is a polymer electrolyte emulsion, wherein a polymer electrolyte particle is dispersed in a dispersing medium, a zeta potential at the measurement temperature of 25°C being in a range of -50 mV to -300 mV.

Also, provided is a polymer electrolyte emulsion, wherein a polymer electrolyte particle is dispersed in a dispersing medium, an ion exchange capacity of a solid material obtained by removing a volatile substance from the polymer electrolyte emulsion being 1.5 to 3.0 meq/g.

## Description

### TECHNICAL FIELD

The present invention relates to a polymer electrolyte emulsion containing a polymer electrolyte as a solid microparticle, which can be utilized in binders, coating materials, electrolytes for cells, polymer solid electrolytes for fuel cells, electrodes for fuel cells, solid condensers, ion exchange membranes, and various sensors. Also, the present invention relates to a catalyst composition, an electrode, a membrane electrode assembly and a polymer electrolyte fuel cell produced using this polymer electrolyte emulsion.

### BACKGROUND ART

Previously, a polymer having a hydrophilic group such as a sulfonic acid group, a carboxyl group (carboxylic acid group) and a phosphoric acid group is utilized in surfactants, emulsifiers, dispersants, polymer solid electrolytes, ion exchange membranes, or the like. On the other hand, in recent years, by utilizing properties of such a polymer such as dispersibility, hydrophilicity, ion capturing property, and low volume resistance in a solvent, the application to binder resins, coating materials, surface treating agents, and electrolytes for cells is studied.

Particularly, a polymer electrolyte fuel cell utilizing a polymer having a hydrophilic group is expected to be practicized (made practicable?) as an electric generator in utility of houses and automobiles in recent years. The polymer electrolyte fuel cell is used as a form in which an electrode called a catalyst layer comprising a catalyst component such as platinum which promotes an oxidation reduction reaction between hydrogen and air is formed on both sides of an ion conductive membrane acting as ion conduction, and a gas diffusion layer for effectively supplying a gas to the catalyst layer is applied to an outer side of the catalyst layer. Herein, the polymer electrolyte membrane in which a catalyst layer is formed on both sides thereof is usually called membrane electrode assembly (hereinafter, may be referred to as "MEA") .

Such a MEA is produced by using a method of directly forming a catalyst layer on an ion conductive membrane, a method of forming a catalyst layer on a substrate which is to be a gas diffusion layer such as a carbon paper and, thereafter, connecting this to an ion conductive membrane, a method of forming a catalyst layer on a flat plate supporting substrate, transferring this onto an ion conductive membrane and, thereafter, peeling the supporting substrate or the like. In these methods, a liquid composition in which a catalyst component is dispersed or dissolved for forming a catalyst layer (hereinafter, may be called by a term "catalyst ink" which is widely used in the art) is used. The catalyst ink is usually obtained by mixing and dispersing a catalyst component in which a platinum group metal is supported on active carbon or the like, a polymer electrolyte solution or a polymer electrolyte dispersion containing a polymer electrolyte as represented by Nafion, and a solvent, a water-repellant, a pore forming agent and a thickener or the like as needed. Previously, the technique of improving electric generation performance of MEA by improving such a catalyst ink is variously studied.

For example, in Japanese Patent Application Laid-Open (JP-A) No.10-302805, disclosed is the technique of increasing a reaction area of an electrode to decrease a concentration overvoltage to obtain a high performance cell by using a step of dispersing a carbon fine powder supporting a noble metal catalyst in an organic solvent to obtain a dispersion, a step of mixing the dispersion and an alcohol solution of a solid polymer electrolyte (manufactured by Asahi Glass Co., Ltd., a fluorine-based polymer electrolyte, trade name "Flemion") to generate a colloid of a particle diameter of 1 to 400 nm of a solid electrolyte and then, obtaining a mixed solution in which the colloid is adsorbed onto the carbon powder, a step of coating this mixed solution on one side of a gas diffusion layer to make an electrode, and a step of pressure-incorporating this electrode on at least one side of a solid polymer electrode membrane.

In addition, in JP-A No.2005-108827, disclosed is the technique obtained by adopting an average radius of gyration of the polymer electrolyte of 150 to 300 nm in a catalyst ink comprising at least a fluorine polymer electrolyte having cation conducting property (perfluorocarbonsulfonic acid), a catalyst-supported particle comprising an electrically conductive carbon particle supporting an electrolyte catalyst, and a dispersing medium, thereby allowing gas diffusion property of a catalyst layer to be modified, a cell voltage of a fuel cell to be increased, and its high cell voltage to be maintained over a long period of time.

In addition, in JP-A No.2005-132996, there is disclosed that an aqueous dispersion comprising a polymer particle comprising polyorganosiloxane as an essential component, and an aqueous solvent, and further comprising a sulfonic acid group, has good film forming property, and can form a film excellent in water resistance, and it is described that the aqueous dispersion can be used as an electrode material of a polymer electrolyte fuel cell. In this reference, the effect is not necessarily clear, but since volume resistance of the aqueous dispersion is small, it is presumed that MEA using this can improve electric generation performance.

In addition, in JP-A No.2005-174861, it is disclosed that a coating solution obtained by a step of mixing a cation exchange resin (polymer having a sulfonic acid group) with an alcohol to prepare a dispersion having a negative zeta potential (minus), a step of changing a zeta potential to positive (plus) by warming the dispersion, and mixing a catalyst powder in the dispersion with a zeta potential changed, increase a reaction site in a triple phase boundary by effectively covering the catalyst powder with a cation exchange resin, and are suitable for producing a catalyst layer of MEA.

In addition, in JP-A No.2005-235521, disclosed is the technique of sufficiently maintaining a necessary triple phase boundary amount for improving electric generation performance of MEA by providing a catalyst layer formed by coating a catalyst paste in which an electrolyte solution obtained by dissolving an electrolyte in a solvent, an electrolyte particle comprising an electrolyte, and a catalyst supported particle in which a catalyst metal is supported on a carrier particle, are dispersed.

### DISCLOSURE OF THE INVENTION

All of these techniques are the technique of enhancing electric generation performance by improving catalyst activity of a catalyst layer. However, the present inventors studies performance of MEA in detail, and it is found out that higher performance of a fuel cell is prevented by peeling of a catalyst layer from an ion conductive membrane. Like this, when the previous polymer electrolyte solution or dispersion is cast-coated on a substrate as a film material, a binder material or a coating material to convert into a film, the resulting coated film is easily peeled from a substrate, and such a peeling tends to be frequent when contacted with water, or exposed to the high humidity state, there is a problem that durability (water resistance) becomes insufficient.

An object of the present invention is to provide a polymer electrolyte emulsion which gives a film showing high adhesion with a substrate, particularly a film which gives small reduction in adhesion and has high durability even when contacted with water, or exposed to the high humidity state, to provide particularly a polymer electrolyte emulsion capable of forming a catalyst layer which can remarkably suppress the aforementioned peeling, and further to provide MEA provided with a catalyst layer obtained by using the polymer electrolyte emulsion, and excellent in electric generation performance.

In order to solve the aforementioned problems, the present inventors have intensively studied and, as a result, have completed the present invention. That is, the present invention provides polymer electrolyte emulsions of the following [1] to [13].
[1] A polymer electrolyte emulsion, wherein a polymer electrolyte particle is dispersed in a dispersing medium, a zeta potential at the measurement temperature of 25°C being in a range of -50 mV to -300 mV.
[2] The polymer electrolyte emulsion according to [1], wherein the zeta potential is in a range of -50 mV to -150 mV.
[3] A polymer electrode emulsion obtained by dispersing polymer electrolyte particles in a dispersing medium, and rendering a zeta potential at the measurement temperature of 25°C in a range of -50 mV to -300 mV with a zeta potential adjuster.
[4] The polymer electrolyte emulsion according to [3], which is obtained by rendering the zeta potential in a range of -50 mV to -150 mV.
[5] The polymer electrolyte emulsion according to any one of [1] to [4], wherein an ion exchange capacity of a solid material obtained by removing a volatile substance from the polymer electrode emulsion is 1.5 to 3.0 meq/g.
[6] The polymer electrolyte emulsion according to any one of [1] to [4], wherein an ion exchange capacity of a solid material obtained by removing a volatile substance from the polymer electrode emulsion is 1.8 to 3.0 meq/g.
[7] A polymer electrolyte emulsion, wherein polymer electrolyte particles are dispersed in a dispersing medium, an ion exchange capacity of a solid material obtained by removing a volatile substance from the polymer electrolyte emulsion being 1.5 to 3.0 meq/g.
[8] The polymer electrolyte emulsion according to [7], wherein the ion exchange capacity is 1.8 to 3.0 meq/g.
[9] The polymer electrolyte emulsion according to any one of [1] to [8], wherein a volume average particle diameter obtained by a dynamic light scattering method is 100 nm to 200 µm.
[10] The polymer electrolyte emulsion according to any one of [1] to [9], wherein a polymer electrolyte constituting the polymer electrolyte particle comprises a polymer electrolyte having a weight average molecular weight in terms of polystyrene measured by gel permeation chromatography of 1000 to 1000000.
[11] The polymer electrolyte emulsion according to any one of [1] to [10], wherein a polymer electrolyte constituting the polymer electrolyte particle comprises an aromatic hydrocarbon polymer electrolyte.
[12] The polymer electrolyte emulsion according to any one of [1] to [11], wherein a content of a good solvent for a polymer electrolyte constituting the polymer electrolyte particle is 200 ppm or less.
[13] The polymer electrolyte emulsion according to any one of [1] to [12], which is used for an electrode of a polymer electrolyte fuel cell.
   In addition, the present invention provides the following [13] to [16] obtained by using the polymer electrolyte emulsion according to any one of [1] to [12].
[14] A catalyst composition comprising the polymer electrolyte emulsion according to any one of [1] to [12], and a catalyst component.
[15] An electrode for a polymer electrolyte fuel cell formed by the catalyst composition according to [14].
[16] A membrane electrode assembly having the electrode for a polymer electrolyte fuel cell according to [15].
[17] A polymer electrolyte fuel cell having the membrane electrode assembly according to [16].

A polymer electrolyte emulsion in which a zeta potential thereof is -50 mV to -300 mV in the polymer electrolyte emulsion of the present invention, can form a film having high adhesion with a substrate. Further, a polymer electrolyte emulsion in which the zeta potential is -50 mV to -150 mV hardly generates peeling from a substrate also in the high humidity state, and can form a film having high practical water resistance. Such a emulsion is extremely useful as a film material, a binder material or a coating material, particularly a material of a catalyst layer of a polymer electrolyte fuel cell, and can provide MEA having enhanced connecting property between an ion conductive membrane and a catalyst layer. Further, since MEA obtained by using the polymer electrolyte emulsion of the present invention hardly causes reduction in output generated by peeling between an ion conductive membrane and a catalyst layer, and can provide MEA excellent in electric generation performance, and therefore, a fuel cell, it is industrially extremely useful.

### BRIEF DESCRIPTION OF THE DRAWING

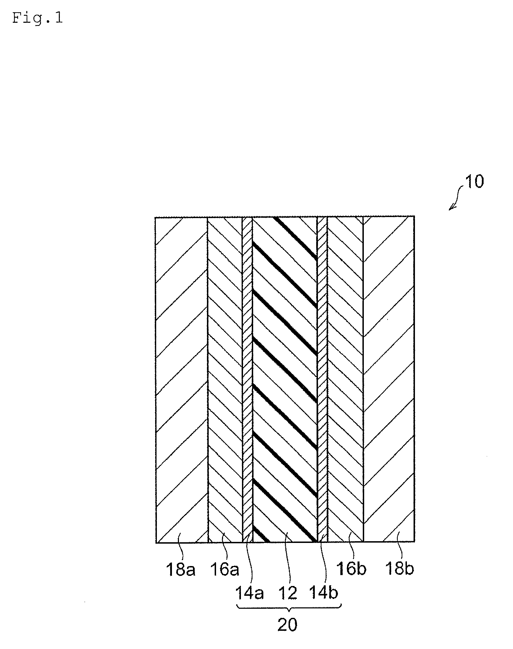

Fig.1 is a view showing schematically construction of a cross-section of a fuel cell of a preferable embodiment.

### EXPLANATION OF SYMBOLS

10···fuel cell, 12···ion conductive film,
14a,14b···catalyst layer, 16a,16b···gas diffusion layer
18a,18b···separator, 20···MEA

### BEST MODE FOR CARRYING OUT THE INVENTION

The present invention will be explained successively below.

### <Polymer electrolyte emulsion>

The polymer electrolyte emulsion of the present invention is an emulsion in which a polymer electrolyte particle containing a polymer electrolyte is dispersed in a dispersing medium. A process for preparing it is not particularly limited, but one example includes a process of preparing a polymer electrolyte solution by solving a polymer electrolyte in a solvent containing a good solvent of the polymer electrolyte, and then adding dropwise this polymer electrolyte solution to another solvent which is a dispersing medium of an emulsion (poor solvent of the polymer electrolyte), and precipitating/dispersing the polymer electrolyte particle in the dispersing medium to obtain a polymer electrolyte dispersion. Further, a step of removing the good solvent contained in the resulting polymer electrolyte dispersion using membrane separation with a dialysis membrane and, further, adjustment of a polymer electrolyte concentration by concentrating the polymer electrolyte dispersion by distillation, can be shown as a preferable process. By this process, a polymer electrolyte emulsion having stable dispersibility can be prepared from every polymer electrolyte. In addition, in the shown processes, definition of the "good solvent" and the "poor solvent" is defined by a weight of a polymer electrolyte which can be dissolved in 100 g of a solvent at 25 °C, the good solvent is a solvent in which 0.1 g or more of the polymer electrolyte can be dissolved, and the poor solvent is a solvent in which only 0.05 g or less of the polymer electrolyte can be dissolved. A remaining amount of the good solvent in the polymer electrolyte emulsion is preferably 200 ppm or less, further preferably 100 ppm or less, furthermore preferably, 50 ppm or less, and it is particularly preferable that the good solvent is removed to such an extent that the good solvent used in a step of preparing the polymer electrolyte solution is not substantially contained in the polymer electrolyte emulsion.

The polymer electrolyte emulsion of the present invention can be produced by such a process, and more preferably, it is preferable that a solvent used for preparing the polymer electrolyte solution contains a good solvent to such an extent that an applied polymer electrolyte can be sufficiently dissolved. This allows a polymer electrolyte molecule to be present in the state where its molecular chain is comparatively widened in the polymer electrolyte solution. When such a polymer electrolyte molecule is put into the poor solvent to form a polymer electrolyte particle, a site having relatively high affinity for the poor solvent in the polymer electrolyte molecule is easily oriented on a particle surface, and a site having relatively low affinity is easily oriented in the interior of a particle, thereby, it becomes possible to control the surface state of the polymer electrolyte particle. In one embodiment of the polymer electrolyte emulsion of the present invention, it is necessary that a zeta potential of the polymer electrolyte emulsion is in the aforementioned range and, in this respect, a process which easily controls the surface state of the polymer electrolyte particle is preferable. In addition, when a part of the polymer electrolyte is precipitated in the polymer electrolyte solution, the precipitated polymer electrolyte acts as a seed during the course of putting the polymer electrolyte molecule into the poor solvent to obtain a polymer electrolyte particle, a particle diameter of the polymer electrolyte particle easily becomes ununiform, and there is a possibility that a polymer electrolyte emulsion with a suitable average particle diameter described later is difficult to be obtained. In order to avoid such an inconvenience, it is preferable that a solvent used in preparation of the polymer electrolyte solution contains a good solvent to such an extent that an applied polymer electrolyte is sufficiently dissolved. In addition, as a suitable polymer electrolyte solution, it is enough that the polymer electrolyte is dissolved to such an extent that the solution can pass through a filter of a 0.2 µm pore diameter.

### <Zeta potential>

In one embodiment of the polymer electrolyte emulsion of the present invention, a surface of the polymer electrolyte particle contained therein is electrified by ionization of an ion exchange group of the polymer electrolyte contained in the polymer electrolyte particle, and has a surface potential (zeta potential).

A zeta potential of the polymer electrolyte emulsion of the present invention is obtained by measuring an electrophoresis mobility by a laser Doppler method at the measurement temperature of 25°C. Such a zeta potential is derived from a particulate substance contained in the polymer electrolyte emulsion, and may be derived of course from the polymer electrolyte particle and from a potential derived from an additive particle, when an additive described later is used, and the additive may contains an additive particle dispersed in a particle-like manner.

Herein, since the polymer electrolyte emulsion obtained by the shown process easily affords a polymer electrolyte particle wherein an ion exchange group is effectively oriented towards a particle surface, a polymer electrolyte emulsion having a high zeta potential can be obtained by controlling a molecular structure, an ion exchange capacity or an ion dissociation degree of an ion exchange group, of the polymer electrolyte. Further, a zeta potential can be also controlled by electric permittivity of a dispersing medium, or a zeta potential adjuster (the details will be described later) such as an ion strength regulating agent which is soluble in the dispersing medium.

The present inventors studied an adhering strength to a substrate of the resulting film, and durability to water of the film (water resistance) regarding a polymer electrolyte emulsion different in various factors, including difference in a molecular structure and, as a result, found out that, when a zeta potential of the polymer electrolyte emulsion is in a range of -50 mV to - 300 mV, it is possible to form a film having good adhesion with a substrate. In order to obtain the film having good adhesion, a zeta potential of the polymer electrolyte emulsion is more preferably -100 mV to -300 mV. Further, the present inventors found out that, a zeta potential of the polymer electrolyte emulsion is in a range of -50 mV to -150 mV, water resistance to an extent of maintenance of such an adhesion is developed even when the resulting film is contacted with water, or is exposed to the high humidity state. In order to obtain higher water resistance, a zeta potential is particularly preferably -50 mV to -120 mV.

Although the reason why such a adhesion and water resistance are developed is not clear, the present inventors presume the following. That is, it is presumed that adhesion is developed because electrostatic interaction is exerted between a particle contained in the polymer electrolyte and a substrate due to a surface potential of the particle. In addition, it is presumed that durability of a film is developed because a hydrophobic part of the polymer electrolyte easily appears on a surface of the polymer electrolyte particle in a suitable zeta potential range, and a network between hydrophobic parts of the polymer electrolyte particles is formed at film formation.

In a polymer electrolyte emulsion having a zeta potential in a range of 0 mV to -50 mV, adhesion with a substrate is remarkably reduced, being not preferable. On the other hand, since the polymer electrolyte emulsion having a negative charge of lower than -300 mV needs a polymer electrolyte having a large amount of ion exchange groups in a molecule, production itself becomes difficult.

A suitable polymer electrolyte and a suitable dispersing medium for obtaining the polymer electrolyte emulsion of such a zeta potential will be described later.

### <Average particle diameter>

An average particle diameter of a particle contained in the polymer electrolyte emulsion of the present invention is preferably in a range of 100 nm to 200 µm as expressed by a volume average particle diameter obtained by a dynamic light scattering method. Such an average particle diameter is preferably in a range of 150 nm to 10 µm, further preferably in a range of 200 nm to 1 µm. When the average particle diameter is in the aforementioned range, there is a tendency that the resulting polymer electrolyte emulsion becomes to have practical storage stability and, when a film is formed, uniformity of the film becomes relatively good. In addition, the particle refers to all of particulate substances dispersed in the polymer electrolyte emulsion in a particle manner, and is a concept including not only a polymer electrolyte particle comprising the polymer electrolyte, but also, when an additive described later is used, all of substances which are dispersed like a particle in the polymer electrolyte emulsion, such as a particle comprising the additive, and the like.

### <Polymer electrolyte>

Then, a suitable polymer electrolyte applied to the present invention will be explained.

The present inventors studied in detail components other than a catalyst substance acting as the catalyst function contained in a catalyst layer of MEA, found out that an ion exchange capacity (hereinafter, may be referred to as "IEC") based on this component influences on interaction between the catalyst layer and an applied ion conductive membrane or a gas diffusion layer and, further, found out that, when a catalyst layer is formed using an emulsion comprising the component, the catalyst layer has extremely higher connecting property with an ion conductive film or a gas diffusion layer. And, the present inventors obtained findings that a polymer electrolyte emulsion in which IEC of this component is controlled by a polymer electrolyte is extremely effective.

Based on these findings, a solid constituting the polymer electrolyte solution was studied in detail and, as a result, it was found out that a catalyst layer obtained by using a polymer electrolyte emulsion having this ion exchange capacity of 1.5 to 3.0 meq/g has good contacting property with an ion conductive film or a gas diffusion layer constituting a fuel cell.

Herein, IEC is a value obtained by drying the polymer electrolyte emulsion, measuring a dry weight of the resulting solid material, obtaining an ion exchange group equivalent number in such a solid material by a titration method, and deriving the value from [ion exchange group equivalent number of solid material]/[dry weight of solid material], and is expressed by an ion exchange group equivalent number per unit weight of a solid material obtained by removing a volatile substance from the polymer emulsion. The polymer electrolyte emulsion of the present invention can contain an emulsifier and an additive, and the solid material contains not only a polymer electrolyte but also these emulsifier and additive, as described later. In order to obtain the solid from the polymer electrolyte emulsion, usually, a component having a highest boiling point is specified among volatile substances contained in the polymer electrolyte emulsion, and drying treatment may be performed at a temperature higher than the boiling point of these components to remove volatile substances. In the present invention, when a dry weight upon performance of such a drying treatment becomes a constant amount, the resulting solid substance is taken as the solid material.

Examples of a method of obtaining the polymer electrolyte include (a) a method of producing a polymer having a site into which an ion exchange group can be introduced, and introducing an ion exchange group into such a polymer to produce a polymer electrolyte, and (b) a method of using a compound having an ion exchange group as a monomer and polymerizing the monomer to produce a polymer electrolyte. In order to obtain a polymer electrolyte of specified IEC using such a production method, in (a), the method can be easily performed by controlling mainly a ratio of a use amount of a reactant of introducing an ion exchange group into a polymer relative to the polymer electrolyte. In (b), the reaction can be easily controlled from a molar mass of a repeating structure unit of the polymer electrolyte which is derived by a monomer having an ion exchange group, and an ion exchange group number. Alternatively, when a comonomer having no ion exchange group is used in combination to perform copolymerization, IEC can be controlled in view of a repeating structure unit having no ion exchange group, a repeating structure unit having an ion exchange group, and its copolymerization ratio.

Among such a polymer electrolytes, a preferable polymer electrolyte will be described later.

In order to further enhance the effect of the present invention, a lower limit of IEC is more preferably 1.8 meq/g or more. An upper limit of IEC is sufficiently 3.0 meq/g or less, more preferably 2.9 meq/g or less, further preferably 2.8 meq/g or less. When IEC is less than 1.5 meq/g, adhesion between a film obtained from the polymer electrolyte emulsion, and an ion conductive film or a gas diffusion layer is reduced and, when IEC is more than 3.0 meq/g, since water resistance of a film itself obtained from the polymer electrolyte emulsion is deteriorated, durability of a fuel cell is reduced, both being not preferable.

The polymer electrolyte used in the present invention has a cationic ion exchange group such as a sulufonic acid group (-SO₃H), a carboxyl group (-COOH), a phosphonic acid group (-PO(OH)₂), a phosphinic acid group (-POH(OH)), a sulfonimide group (-SO₂NH₂-), a phenolic hydroxy group (-Ph(OH)(Ph represents a phenyl group)) and the like, or an anionic exchange group such as primary and tertiary amine groups. Among them, the polymer electrolyte having a sulfonic acid group and/or a phosphonic acid group is more preferable, and the polymer electrolyte having a sulfonic acid group is particularly preferable.

Representative examples of such a polymer electrolyte include (A) a polymer electrolyte in which a sulfonic acid group and/or a phosphonic acid group are introduced into a polymer having a main chain comprising an aliphatic hydrocarbon; (B) a polymer electrolyte in which a sulfonic acid group and/or phosphonic acid group are introduced into a polymer in which all or a part of a hydrogen atom of an aliphatic hydrocarbon chain is substituted with a fluorine atom; (C) a polymer electrolyte in which a sulfonic acid group and/or a phosphonic acid group are introduced into an aromatic polymer having a main chain having an aromatic ring; (D) a polymer electrolyte in which a sulfonic acid group and/or a phosphonic acid group are introduced into a polymer substantially containing no carbon atom in a main chain, such as polysiloxane and polyphosphazene; (E) a polymer electrolyte in which a sulfonic acid group and/or a phosphonic acid group are introduced into a copolymer comprising any two or more kinds of repeating units selected from repeating units constituting a polymer before introduction of a sulfonic acid group and/or a phosphonic acid group of the (A) to (D); (F) a polymer electrolyte having a main chain or a side chain containing a basic nitrogen atom, in which an acidic compound such as sulfuric acid and phosphoric acid is introduced into the nitrogen atom through an ionic bond.

Examples of the polymer electrolyte of (A) include polyvinylsulfonic acid such as an ethylene-vinylsulfonic acid copolymer, polystyrenesulfonic acid such as a resin in which a sulfonic acid group is introduced into polystyrene or poly(α-methylstyrene) with a sulfonating agent, and poly(α-methylstyrene)sulfonic acid. Herein, in the case of an ethylene-vinyl sulfonic acid copolymer, IEC can be controlled by a copolymerization ratio of ethylene and vinylsulfonic acid used as a monomer. In addition, in a resin in which a sulfonic acid group is introduced into polystyrene or poly(α-methylstyrene) with a sulfonation agent, IEC can be controlled by a use amount of the sulfonation agent.

Examples of the polymer electrolyte of (B) include a sulfonic acid-type polystyrene-graft-ethylene-tetrafluoroethylene copolymer (ETFE) constituted of a main chain made by copolymerization of a fluorine carbide-based vinyl monomer and a hydrocarbon-based vinyl monomer, and a hydrocarbon-based side chain having a sulfonic acid group described in JP-No. 9-102322, and a polymer electrolyte obtained by graft-polymerizing a compolymerized polymer of a fluorine carbide-based vinyl monomer and a hydrocarbon-based vinyl monomer, with α,β,β-trifluorostyrene, and introducing a sulfonic acid group into this with a sulfonating agent such as chlorosulfonic acid, fluorosulfonic acid and the like described in U.S.Patent No. 4,012,303 or U.S.Patent No. 4,605,685. Herein, in JP-A No. 9-102322, IEC of 1.3 to 2.7 meq/g is disclosed in its Example, and a sulfonated poly(trifluorostyrene)-graft-ETFE membrane in which IEC is controlled by a use amount of a sulfonating agent can be obtained according to U.S.Patent No. 4,012,303 or U.S.Patent No. 4,605,685.

The polymer electrolyte of (C) may be such that a main chain is interrupted with a hetero atom such as an oxygen atom and the like, and examples include polymer electrolytes in which a sulfonic acid group is introduced into each of homopolymers such as polyether ether ketone, polysulfone, polyether sulfone, poly(arylene/ether), polyimide, poly((4-phenoxybenzoyl)-1,4-phenylene), polyphenylene sulfide, polyphenylquinoxalene and the like, sulfoarylated polybenzimidazole, sulfoalkylated polybenzimidazole, phosphoalkylated polybenzimidazole (JP-A No. 9-110982), phosphonated poly(phenylene ether)(J. Appl. Polym. Sci., 18, 1969 (1974)).

Examples of the polymer electrolyte of (D) include polymer electrolytes in which a sulfonic acid group is introduced into polyphosphazene.

In these resins shown as (C) or (D), IEC can be controlled by a use amount of a sulfonating agent as described above.

The polymer electrolyte of (E) may be a polymer electrolyte in which a sulfonic acid group and/or a phosphonic acid group are introduced into a random copolymer, a polymer electrolyte in which a sulfonic acid group and/or a phosphonic acid group are introduced into an alternate copolymer, or a polymer electrolyte in which a sulfonic acid group and/or a phosphonic acid group are introduced into a block copolymer. Examples of the polymer electrolyte in which a sulfonic acid group is introduced into a random copolymer include a sulfonated polyether sulfone-dihydroxybiphenyl copolymer described in JP-A No. 11-116679 and, also in such a copolymer, the IEC can be controlled by a use amount of a sulfonating agent.

In addition, examples of the block copolymer include a block copolymer having a block containing a sulfonic acid group as described in JP-A 2001-250567, a block copolymer in which a part or all of a sulfonic acid group of the above block copolymer is substituted with a phosphonic acid group. For example, JP-A No. 2001-250567 discloses a block copolymer comprising a segment having a sulfonic acid group (hydrophilic segment), and a segment substantially having no ion exchange group (hydrophobic segment) and, in such a block copolymer, the IEC can be controlled by a compositional ratio of the hydrophilic segment and the hydrophobic segment.

Examples of the polymer electrolyte of (F) include polybenzimidazole containing phosphoric acid described in Japanese Patent Application National Publication (Laid-Open) No. 11-503262 and, in this, IEC can be controlled by an amount of phosphoric acid to be contained.

Among the aforementioned polymer electrolytes, polymer electrolytes of (C) and (E) are preferable from a viewpoint of realization of both of adhesion and water resistance (durability) at a higher degree and, furthermore preferably, a polymer electrolyte having a structure in which a sulfonic acid group is introduced into a block copolymer, and having a polymer main chain having an aromatic ring is preferable since a polymer electrolyte particle having a high negative zeta potential is easily obtained. In addition, an aromatic polymer electrolyte in which a polymer main chain is connected to an aromatic ring is particularly preferable since heat resistance is excellent. Among the aromatic polymer electrolyte, an aromatic hydrocarbon-based polymer electrolyte is preferable since a catalyst layer having connecting property, which is the object of the present invention, of a higher degree, can be formed. Herein, the "hydrocarbon-based" is defined by a content (15% by weight or less) of a fluorine atom in an element compositional ratio constituting the polymer electrolyte.

Among the aforementioned block copolymers, a block copolymer having a segment having an ion exchange group, and a segment substantially having no ion exchange group is preferable. Such a block copolymer may be a block copolymer having each one of these segments, or a block copolymer having two or more of any one of these segments, and multi block copolymer having two or more of both segments.

### <Weight average molecular weight>

The polymer electrolyte constituting a polymer electrolyte particle contained in the polymer electrolyte emulsion is preferable when it contains a polymer electrolyte having a molecular weight of 1000 to 1000000 expressed by a weight average molecular weight in terms of polystyrene by a gel permeation chromatography method (hereinafter referred to as "GPC method"). A lower limit thereof is 5000 or more, particularly preferably 10000 or more, and an upper limit thereof is 500000 or less, particularly preferably 300000 or less.

When the polymer electrolyte particle comprising the polymer electrolyte having the weight average molecular weight in the aforementioned range is contained, a strength of the resulting catalyst layer becomes good, and production of a catalyst layer using a polymer electrolyte emulsion described later becomes easy, being preferable.

### <Dispersing medium>

The dispersing medium constituting the polymer electrolyte emulsion of the present invention is not particularly limited unless it prevents dispersibility of the polymer electrolyte to be applied, and water, an alcohol solvent such as methanol and ethanol, a non-polar organic solvent such as hexane and toluene or a mixture of them is used. Among them, from a viewpoint of reduction in the environmental load when industrially used, it is preferable to use water or a solvent containing water as a main component, as the dispersing medium. Examples of the particularly preferable dispersing medium include a dispersing medium in which a good solvent for an applied polymer electrolyte is 200 ppm or less. A content of a good solvent in the dispersing medium is further preferably 100 ppm or less, particularly preferably 50 ppm or less. In the method of preparing the polymer electrode emulsion shown above, since a good solvent is necessarily contained in the polymer electrolyte dispersion during the course of obtaining the polymer electrolyte dispersion, it is necessary to reduce a content thereof to 200 ppm or less. In this case, if a content of the good solvent in the polymer electrolyte dispersion is reduced using membrane separation, the cost becomes low, being preferable.

### <Polymer electrolyte concentration>

The polymer electrolyte used in the polymer electrolyte emulsion of the present invention is preferably 0.1 to 10% by weight, more preferably 0.5 to 5% by weight, further preferably 1 to 2% by weight based on a total weight of the polymer electrolyte emulsion. When a content of the polymer electrolyte based on a total weight of the polymer electrolyte solution is in the aforementioned range, since a large amount of a solvent is not necessary for forming a film, this is effective, and coating property is excellent, being preferable.

### <Zeta potential adjuster>

For adjusting a zeta potential of the polymer electrolyte emulsion of the present invention, the potential can be controlled in a preferable range by a kind of the polymer electrolyte forming the polymer electrolyte particle, an additive, and a kind of the dispersing medium as described above and, as a simpler method, there is a method of using a zeta potential adjuster. Examples of adjustment of a zeta potential include a procedure of changing a pH of an emulsion, and a procedure of controlling an ionic strength or electric permittivity or the dispersing medium, and these procedures may be arbitrarily combined. The method of using such a zeta potential adjuster is preferable from a viewpoint of easy operation.

For example, a zeta potential may be adjusted by utilizing the fact that as a pH is greater, a zeta potential becomes smaller. For such an adjustment of a pH, an acid such as hydrochloric acid, sulfuric acid, nitric acid and phosphoric acid, and an alkali such as sodium hydroxide and potassium hydroxide can be used.

In addition, a zeta potential may be adjusted by utilizing the fact that as an ion strength becomes greater, a zeta potential becomes smaller. For adjusting an ion strength, an inorganic salt such as sodium chloride, potassium chloride and aluminum nitrate can be used.

In addition, a zeta potential may be adjusted by utilizing the fact that as specific electric permittivity of the solvent which is the dispersing solvent is smaller, a zeta potential becomes smaller. Such a specific electric permittivity of the solvent can be selected from specific permittivities described, for example, in the known literature, for example, Solvent Handbook (authored by Shozo Asahara/Jinichiro Tokura/Shin Okawahara/Keiju Kumano/Manabu Imose, Kodansha Ltd., published in 1976). In addition, since in such a specific electric permittivity, additivity applies, specific permittivity of the dispersing medium itself can be easily obtained from a solvent spices contained in the dispersing medium, and specific electric permittivity. Among them, a preferable solvent can be prepared by arbitrarily mixing dimethyl sulfoxide (specific electric permittivity: 49), N-methyl-2-prrodidone (specific electric permittivity: 32), methyl alcohol (specific electric permittivity: 33), and water (specific electric permittivity: 78).

In the foregoing, "zeta potential is becomes smaller" indicates that a potential difference at an interface between the polymer electrolyte particle and the dispersing medium becomes smaller in the polymer electrolyte emulsion of the present invention.

### <Emulsifying agent>

The polymer electrolyte emulsion of the present invention improves adhesion of the resulting film with a substrate, and water resistance thereof by adjusting a zeta potential as described above, and an emulsifier may be further added in order to improve dispersion stability of a particle in the polymer electrolyte emulsion. Examples of the emulsifier include surfactants which are generally used. Herein, examples of surfactants include anionic surfactants such as alkyl sulfate ester (salt), alkyl aryl sulfate ester (salt), alkyl phosphate ester (salt), and fatty acid (salt); cationic surfactants such as alkyl amine salt, and alkyl quaternary amine salt; nonionic surfactants such as polyoxyethylene alkyl ether, polyoxyethylene alkyl aryl ether, and block-type polyether; amphoteric surfactants such as a carboxylic acid type (e.g. amino acid type, betaine acid-type etc.), and sulfonic acid type. In addition, reactive emulsifiers which are available from a market such as LATEMUL S-180A [manufactured by Kao Corporation], ELEMINOL JS-2 [manufactured by Sanyo Chemical Industries, Ltd.], Aquaron HS-10, KH-10 [manufactured by Dai-ichi Kogyo Seiyaku Co., Ltd.], Adekalia Soap SE-10N, SR-10 [manufactured by ADEKA], and Antox MS-60 [manufactured by Nippon Nyukazai Co., Ltd.] can be also used.

Furthermore, among polymers having a hydrophilic group, a polymer which is soluble in the dispersing medium in the polymer electrolyte emulsion, and has the dispersing function can be used as an emulsifier. Examples of such a polymer include a styrene-maleic acid copolymer, a styrene/acrylic acid copolymer, polyvinyl alcohol, polyalkylene glycol, sulfonated polyisoprene, a sulfonated hydrogenated styrene/butadiene copolymer, a sulfonated styrene/maleic acid copolymer, and a sulfonated styrene/acrylic acid copolymer. Among them, a polymer which is dissolved in a used dispersing medium can be selected, and used as an emulsifier. Particularly, since a volume resistance when used as a proton conductor can be reduced by using a polymer having a sulfonic acid group as an acid type, this is preferable from a viewpoint of application to a member for a polymer electrolyte fuel cell. Examples of such a polymer include sulfonated polyisoprene, a sulfonated hydrogenated styrene/butadiene copolymer, a sulfonated styrene/maleic acid copolymer, and a sulfonated styrene/acrylic acid copolymer.

These emulsifiers can be used alone, or two or more kinds can be used together. When used, the emulsifier is usually used at 0.1 to 50 parts by weight based on 100 parts by weight of the polymer electrolyte emulsion. A use amount of such an emulsifier is preferably 0.2 to 20 parts by weight, further preferably 0.5 to 5 parts by weight. When a use amount of the emulsifier is in this range, since dispersion stability of the polymer electrolyte emulsion is improved and, at the same time, operability such as foaming suppression becomes good, this is preferable.

### <Other additives>

Further, the polymer electrolyte emulsion of the present invention may contain other components (additives) without preventing the effect objected by the present invention, in addition to the polymer electrolyte particle. Examples of such the other components include inorganic or organic particles, adhesion aids, sensitizers, leveling agents and coloring agents.

Particularly, when a film obtained from the polymer electrolyte emulsion of the present invention is used as a constituent component of an electrode of a fuel cell, a peroxide is generated at the electrode during operation of the fuel cell, this peroxide is changed into a radical species while diffusing, this is transferred to an ion conductive membrane connected to the electrode, degrading an ion conductive material (polymer electrolyte) constituting the ion conductive membrane, in some cases. In order to avoid such an inconvenience, it is preferable that a stabilizer which can impart radical resistance is used as an additive for the polymer electrolyte emulsion.

Such a stabilizer may be contained in the polymer electrolyte particle constituting the polymer electrolyte emulsion, may be dissolved in the dispersing medium, or may be present as a fine particle comprising other component, separately from the polymer electrolyte particle.

### <Film molding method>

The polymer electrolyte emulsion of the present invention can be applied to various utilities, which are used in a form of, particularly, a coated film or a film such as a coating material, a binder resin, and a polymer solid electrolyte membrane. In addition, when applied to such a utilities, other polymer may be used jointly in order to improve physical properties or the like. Examples of other polymer include the known polymers such as a urethane resin, an acryl resin, a polyester resin, a polyamide resin, polyether, polystyrene, polyesteramide, polycarbonate, polyvinyl chloride, and a diene-based polymer such as SBR and NBR. Particularly, the polymer electrolyte emulsion of the present invention, when used as a binder resin of a catalyst layer of a polymer electrolyte fuel cell, develops high adhesion with an ion conductive membrane contacting with such a catalyst layer.

Alternatively, from the polymer electrolyte emulsion of the present invention, a film having a good precision can be obtained by a variety of film molding methods. As the film molding methods, for example, cast film molding, spray coating, brush coating, roll coater, flow coater, bar coater, and dip coater can be used. A thickness of the coated film is different depending on utility, and a dry membrane thickness is usually 0.01 to 1,000 µm, preferably 0.05 to 500 µm.

Examples of a substrate to be coated include a substrate comprising a polymer material such as a polycarbonate resin, an acryl resin, an ABS resin, a polyester resin, polyethylene, polypropylene, and nylon, a substrate comprising a nonferrous metal such as aluminum, copper, and duralumin, a steel plate such as stainless, and iron, a carbon material, alumina, a substrate comprising an inorganic hardened body, a glass plate, a wood, a paper, and a gypsum. A shape of the substrate is not particularly limited, and from a planar material to a porous material such as a non-woven fabric can be also used.

In addition, when the polymer electrolyte emulsion is used to form a catalyst layer of the polymer electrolyte fuel cell, a catalyst ink using the polymer electrolyte emulsion is coated on an ion conductive membrane to form the catalyst layer on the ion conductive membrane. The catalyst ink is a term which is widely used in the art, and means a liquid composition for forming the catalyst layer. The catalyst ink can be obtained by mixing a catalyst component such as a noble metal such as platinum, and a platinum-ruthenium alloy, a complex-based electrode catalyst (described, for example, in "Fuel Cell and Polymer", pp.103-112, Kyoritsu Shuppan Co., Ltd., edited by The Society of Polymer Science, Japan Fuel Cell Material Conference, published on November 10, 2005) and the like, or a composite of the catalyst component and an electrically conductive material such as carbon and the like, into the polymer electrolyte emulsion of the present invention.

Using the shown substrate as a supporting substrate, the polymer electrolyte emulsion of the present invention is coated on this supporting substrate, and dried, and a membrane obtained by peeling from the supporting substrate can be used as the ion conductive membrane of the polymer electrolyte fuel cell.

The emulsion can be also suitably used as a substrate modifier or an adhesive which is used by coating on a surface of the shown various substrates.

### <Membrane electrode assembly (MEA)>

Among the aforementioned utilities provided by the polymer electrolyte emulsion of the present invention, regarding use as a member of a particularly preferable fuel cell, particularly utility related to the membrane electrode assembly (hereinafter, may be referred to as "MEA") constituting the polymer electrolyte fuel cell, details will be explained.

Herein, MEA is such that an electrode called a catalyst layer containing a catalyst component which promotes an oxidation reduction reaction of hydrogen and the electrodes are formed on both sides of an ion conductive membrane. Further, an embodiment having a gas diffusion layer for effectively supplying a gas to the catalyst layer on an outer side of both catalyst layers of MEA may be called a membrane electrode gas diffusion layer assembly (MEGA).

The ion conductive membrane contains a polymer electrolyte responsible for ion conductivity, and has a membrane-like structure. As the polymer electrolyte contained in the ion conductive membrane, examples include the same polymer electrolytes as those shown as the polymer electrolyte constituting the polymer electrolyte emulsion. Like this, both of the ion conductive membrane constituting MEA, and the catalyst layer contain the polymer electrolytes, and such a polymer electrolytes may be the same or different.

Among the shown polymer electrolytes, as the polymer electrolyte which is applied to the ion-conductive membrane, polymer electrolytes of the (C) and (E) are preferable from a viewpoint that both of high electric generation performance and durability are satisfied and, particularly, among the (E), a polymer electrolyte having a structure in which a sulfonic acid group is introduced into a block copolymer, and in which a polymer main chain has an aromatic ring is preferable, and a block copolymer comprising a block having a sulfonic acid group and a block substantially having no ion exchange group is particularly preferable.

Examples of such a block copolymer include a block copolymer having a sulfonated aromatic polymer block described in JP-A No.2001-250567, and a block copolymer having a main chain structure of polyether ketone and polyether sulfone described in patent references such as JP-A No.2003-31232, JP-A No.2004-359925, JP-A No.2005-232439, JP-A No. 2003-113136 and the like.

Further, the ion conductive membrane may contain other components in such a range that proton conductivity is not remarkably reduced, in addition to the shown polymer electrolytes, depending on desired property. Examples of such the other components include additives such as plasticizers, stabilizers, releasing agents, water retention agents and the like which are used in normal polymers. Particularly, the stabilizer which can impart the radical resistance is preferably contained in the ion conductive membrane since it can also suppress degradation of the ion conductive membrane of the fuel cell.

In addition, for the purpose of improving a mechanical strength of the ion conductive membrane, a composite membrane obtained by complexing the polymer electrolyte and a particular support may be used. Examples of the support include substrates of a fibril shape or a porous membrane shape.

The MEA is produced using a method of forming a catalyst layer directly on the ion conductive membrane, a method of forming a catalyst layer on a flat plate supporting substrate, transferring this onto the ion conductive membrane, and peeling the supporting substrate, or the like. Alternatively, after a catalyst layer is formed on a substrate which is to be a gas diffusion layer such as a carbon paper and the like, this may be connected with the ion conductive membrane to form MEA as MEGA.

The polymer electrolyte emulsion of the present invention can be applied to a member such as a catalyst layer and an ion conductive membrane constituting such a MEA, a primer or a binder resin used as an additive of such a member, or an adhesive used in connecting a catalyst layer and an ion conductive membrane.

Particularly, it is preferable that the polymer electrolyte emulsion of the present invention is applied to a catalyst layer among members constituting the MEA.

Specifically, it is suitable that a catalyst layer is formed on the ion conductive membrane using a catalyst ink comprising the polymer electrolyte emulsion of the present invention.

The catalyst ink contains a catalyst component and the polymer electrolyte emulsion as an essential component. As the catalyst component, components which are used in the previous fuel cell can be used as they are, and examples include noble metals such as platinum, a platinum-ruthenium alloy, and a complex-based electrode catalyst (described, for example, in "Fuel Cell and Polymer", pp.103-112, Kyoritsu Shuppan Co., Ltd., edited by The Society of Polymer Science, Japan Fuel Cell Material Conference, published on November 10, 2005). Further, from a viewpoint that transportation of a hydrogen ion and electron in a catalyst layer can be easily conducted, it is preferable to use an electrically conductive material in which the catalyst substance is supported on a surface. Examples of the electrically conductive material include electrically conductive carbon materials such as carbon black and carbon nanotube, and ceramic materials such as titanium oxide.

Any other components constituting the catalyst ink are possible, and not particularly limited, but a solvent may be added for the purpose of adjusting a viscosity of the catalyst ink. Alternatively, a water-repellent material such as PTFE for the purpose of enhancing water repellency of the catalyst layer, and a pore making material such as calcium carbonate for the purpose of enhancing gas diffusivity of the catalyst layer and, further, a stabilizer such as a metal oxide for the purpose of enhancing durability of the resulting MEA may be contained.

The catalyst ink is obtained by mixing the aforementioned components by the known method. Examples of a mixing method include an ultrasound dispersing device, a homogenizer, a ball mill, a planetary ball mill, and a sand mill.

Using the catalyst ink prepared as described above, the catalyst layer is formed on the ion conductive membrane. As such a forming method, the known technique can be applied, but the catalyst ink containing the polymer electrolyte emulsion of the present invention enables to form the catalyst layer having high connecting property on the ion conductive membrane by directly coating on the ion conductive membrane, and drying-treating this.

A method of coating the catalyst ink is not particularly limited, but the existing method such as a die coater, screen printing, a spray method, an ink jet method and the like can be used.

As a more preferable embodiment, when MEA is prepared by forming a catalyst layer (electrode) on an ion conductive membrane by coating a catalyst ink containing the polymer electrolyte emulsion of the present invention and a platinum-supported carbon on the ion conductive membrane, and drying this, the resulting MEA is excellent in an adhering strength between an electrode and the ion conductive membrane, and the electrode excellent in water resistance (durability) can be obtained. Alternatively, when MEA is formed by coating the polymer electrolyte emulsion on the ion conductive membrane, and placing a platinum-supported carbon particle on the emulsion-coated membrane before drying of the resulting emulsion-coated membrane, this MEA is excellent in an adhering strength between an electrode and the ion conductive membrane, and the electrode excellent in durability is obtained.

In addition, when the polymer electrolyte emulsion of the present invention is used as an adhesive upon connection of the catalyst layer of MEA and a gas diffusion layer, MEGA excellent in adhering property and water resistance is obtained.

### <Fuel cell>

Then, a fuel cell provided with MEA obtained by the polymer electrolyte emulsion of the present invention will be explained.

Fig.1 is a view schematically showing a cross-section construction of a fuel cell related to a preferable embodiment. As shown in Fig.1, in a fuel cell 10, there are catalyst layers 14a,14b on both sides of an ion conductive membrane 12 so that layers hold the membrane, and this is MEA20 obtained by the process of the present invention. Further, catalyst layers on both sides are provided with gas diffusion layers 16a, 16b, respectively, and separators 18a,18b are formed on the gas diffusion layers.

Herein, an entity provided with MEA20 and gas diffusion layers 16a,16b is usually abbreviated as MEGA.

Herein, catalyst layers 14a,14b are layers functioning as an electrode layer in the fuel cell, and any one of them is to be an anode catalyst layer, and the other is to be a cathode catalyst layer.

Gas diffusion layers 16a,16b are provided so as to hold both sides of MEA20, and promote diffusion of a raw material gas to catalyst layers 14a,14b. It is preferable that the gas diffusion layers 16a,16b are constituted with a porous material having electric conductivity. For example, a porous carbon non-woven fabric and a carbon paper can effectively transport a raw material gas to catalyst layers 14a,14b, being preferable.

Separators 18a,18b are formed of a material having electric conductivity, and examples of such a material include carbon, resin-molded carbon, titanium, stainless and the like. It is preferable that such a separators 18a,18b are such that a groove being a flow path for a fuel gas or the like is formed on catalyst layers 14a,14b sides (not shown).

And, the fuel cell 10 can be also obtained by holding the MEGA with one pair of separators 18a,18b, and connecting them.

The fuel cell of the present invention is not necessarily limited to a fuel cell having the aforementioned construction, but may have arbitrarily a different construction in a range that the gist thereof is not departed.

Alternatively, the fuel cell 10 may have the aforementioned structure which is sealed with a gas sealing body or the like. Further, the fuel cell 10 of the aforementioned structure may be subjected to practical use as a fuel cell stack by connecting plural fuel cells in series. And, the fuel cell having such a construction can be operated as a polymer electrolyte fuel cell when a fuel is hydrogen, or as a direct methanol-type fuel cell when a fuel is a methanol aqueous solution.

### <Other utility>

Alternatively, the polymer electrolyte emulsion of the present invention can develop or maintain water resistance and hygroscopicity by coating on various hydrophobic surfaces. Alternatively, the emulsion can prevent staining with static charge, or grime adhesion. Furthermore, when coated on a porous material such as a non-woven fabric, for example, the action of capturing a weak base such as ammonia and amine present in the air or water, or an ionic substance is exhibited. In addition, by coating-treating a surface of a separator for a cell, the effect of improving affinity for an electrolyte for a cell, and leading to improvement in cell properties such as self-discharging property can be also expected.

The following Examples illustrate the present invention in more detail below, but the present invention is not limited by these Examples.

### <Method of measuring ion exchange capacity of polymer electrolyte>

A polymer electrolyte to be subjected to measurement was processed into a form of a membrane by a solvent casting method, and a dry weight was obtained using a halogen moisture percentage meter set at a heating temperature of 105°C. Then, this membrane was immersed in 5 mL of a 0.1 mol/L sodium hydroxide aqueous solution, 50 mL ion-exchange water was further added, and this was allowed to stand for 2 hours. Thereafter, to a solution in which this membrane was immersed was added gradually 0.1 mol/L hydrochloric acid, thereby, titration was performed to obtain a neutralization point. And, from a dry weigh of the membrane and an amount of hydrochloric acid necessary for the neutralization, an ion exchange capacity (unit: meq/g) of the polymer electrolyte was calculated.

### <Method of measuring ion exchange capacity of solid material obtained by removing volatile substance from polymer electrolyte emulsion>

About 10 mL of a polymer electrolyte emulsion to be subjected to measurement was added dropwise to a glass petri dish, and this was dried using an oven set at a temperature of 95°C. A dry weight of the resulting solid was obtained using a halogen moisture percentage meter set at a heating temperature of 105°C. Then, this solid was immersed in 5 mL of a 0.1 mol/L sodium hydroxide aqueous solution, 50 mL of ion-exchanged water was further added, and this was allowed to stand for 2 hours. Thereafter, to a solution in which this membrane was immersed was added gradually 0.1 mol/L hydrochloric acid, thereby, titration was performed to obtain a neutralization point. And, from a dry weight of the solid material and an amount of hydrochloric acid necessary for the neutralization, an ion exchange capacity (unit: meq/g) of the solid material obtained by removing a volatile substance from a polymer electrolyte emulsion was calculated.

### <Method of measuring weight average molecular weight>

By a gel permeation chromatography (GPC) method, a weight average molecular weight in terms of polystyrene was obtained. Measurement conditions of GPC are as follows. GPC conditions
·GPC measuring apparatus manufactured by TOSOH HLC-8220
·Column manufactured by Shodex connection of two AT-80M's in series
·Column temperature 40°C
·Mobile phase solvent Dimethylacetamide (LiBr was added to be 10 mmol/dm³)
·Solvent flow rate 0.5 mL/min

### <Method of measuring average particle diameter>

An average particle diameter of each emulsion was measured using a dynamic light scattering method (Concentrated system particle diameter analyzer FPAR-1000 [manufactured by Otsuka Electronics Co., Ltd.]). A measurement temperature is 30°C, an accumulated time is 30 min, and a wavelength of laser used in measurement is 660 nm. The resulting data was analyzed by the CONTIN method using an analysis software (FPAR System VERSION 5.1.7.2) attached to the apparatus, thereby, a scattering intensity distribution was obtained, and a particle diameter of a highest frequency was adopted as an average particle diameter.

### <Method of measuring zeta potential>

Measurement of an electrophoresis mobility by a laser Doppler method was performed, and a zeta potential of the polymer electrolyte emulsion was obtained from electric permittivity and a viscosity of a dispersing medium of the polymer electrolyte emulsion. Measurement conditions of the laser Doppler method are as follows.

### Laser Doppler method measuring conditions

·Laser Doppler measuring apparatus manufactured by Malvern Instruments Ltd
Zetasizer Nano ·Laser wavelength 632 nm
·Temperature 25°C
·Cell Capillary cell
·Accumulation times 20

### <Method of measuring pH>

A pH was measured to obtain a pH of the polymer electrolyte emulsion. Measurement conditions of pH measurement are as follows.

### Measuring conditions

- pH meter manufactured by TOKO Chemical TPX-90i
- pH electrode manufactured by TOKO Chemical PCE103CS-SOLID RUBBER COMPONENT
- Measurement temperature 25°C
- pH calibration point pH=4.7

### Production Example 1 [Synthesis of dipotassium 4,4'-difluorodiphenylsulfone-3,3'-disulfonate]

To a reactor equipped with a stirring machine were added 467 g of 4,4'-difluorodiphenylsulfone and 3500 g of 30% fuming sulfuric acid, followed by a reaction at 100°C for 5 hours. The resulting reaction mixture was cooled, and added to a large amount of ice water, and further, 470 mL of a 50% potassium hydroxide aqueous solution was added dropwise thereto.

Then, the precipitated solid was collected by filtration, washed with ethanol, and dried. The resulting solid was dissolved in 6.0 L of deionized water, a 50% aqueous potassium hydroxide solution was added to adjust to pH 7.5, and 460 g of potassium chloride was added. The precipitate solid was collected by filtration, washed with ethanol, and dried.

Thereafter, the resulting solid was dissolved in 2.9 L of dimethyl sulfoxide (hereinafter, referred to as "DMSO"), an insoluble inorganic salt was removed by filtration, and the residue was further washed with 300 mL of DMSO. To the resulting filtrate was added dropwise 6.0 L of a solution of ethyl acetate/ethanol=24/1, and the precipitate solid was washed with methanol, and dried at 100°C to obtain 482 g of a solid of dipotassium 4,4'-difluorodiphenylsulfone-3,3'-disulfonate.

### Production Example 2 [Production of polymer electrolyte A]

### (Synthesis of polymer compound having sulfonic acid group)

Under argon atmosphere, to a flask equipped with an azeotropic distillation device were added 9.32 parts by weight of dipotassium 4,4'-difluorodiphenylsulfone-3,3'-disulfonate obtained in Production Example 1, 4.20 parts by weight of potassium 2,5-dihydroxybenzenesulfonate, 59.6 parts by weight of DMSO, and 9.00 parts by weight of toluene, and an argon gas was bubbled for 1 hour while stirring at room temperature.

Thereafter, to the resulting mixture was added 2.67 parts by weight of potassium carbonate, and this was heated to stir at 140°C to perform azeotropic dehydration. Thereafter, heating was continued while toluene was distilled off to obtain a DMSO solution of a polymer compound having a sulfonic acid group. A total heating time was 14 hours. The resulting solution was allowed to cool to room temperature.

### (Synthesis of polymer compound substantially having no ion exchange group)

Under argon atmosphere, to a flask equipped with an azeotropic distillation device were added 8.32 parts by weight of 4,4'-difluorodiphenylsulfone, 5.36 parts by weight of 2,6-dihydroxynaphthalene, 30.2 parts by weight of DMSO, 30.2 parts by weight of N-methyl-2-pyrrolidone (hereinafter, referred to as "NMP,"), and 9.81 parts by weight of toluene, and an argon gas was bubbled for 1 hour while stirring at room temperature.

Thereafter, to the resulting mixture was added 5.09 parts by weight of potassium carbonate, and this was heated to stir at 140°C to perform azeotropic dehydration. Thereafter, heating was continued while toluene was distilled off. A total heating time was 5 hours. The resulting solution was allowed to cool to room temperature to obtain an NMP/DMSO mixed solution of a polymer compound substantially having no ion exchange group.

### (Synthesis of block copolymer)

While the resulting NMP/DMSO mixed solution of a polymer compound substantially having no ion exchange group was stirred, to this were added a total amount of the DMSO solution of a polymer compound having a sulfonic acid group, 80.4 parts by weight of NMP, and 45.3 parts by weight of DMSO, and a block copolymerization reaction was performed at 150°C for 40 hours.

After completion of the reaction, the reaction solution was added dropwise to a large amount of 2N hydrochloric acid, to immerse it therein for 1 hour. Thereafter, the produced precipitate was filtered off, and immersed in again in 2N hydrochloric acid for 1 hour. The resulting precipitate was filtered off, washed with water, and immersed in a large amount of hot water at 95°C for 1 hour. And, after filtration, the resulting cake was dried at 80°C for 12 hours to obtain a polymer electrolyte A which is a block copolymer. A structure of this polymer electrolyte A is shown below.

The description of "block" in the following formula indicates that the structure has each one or more of a block having a sulfonic acid group and a block having no ion exchange group.

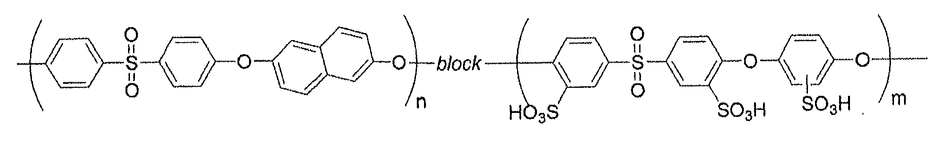

An ion exchange capacity of the resulting electrolyte A was 1.9 meq/g, and a weight average molecular weight was 4.2×10⁵. And, m and n indicate an average polymerization degree of a repeating unit in a parenthesis constituting each block.

### Production Example 3 [Production of polymer electrolyte B]

Under argon atmosphere, into a flask equipped with an azeotropic distillation device were placed 600 ml of DMSO, 200 mL of toluene, 26.5 g (106.3 mmol) of sodium 2,5-dichlorobenzenesulfonate, 10.0 g of the following polyether sulfone which is a terminal chloro-type : 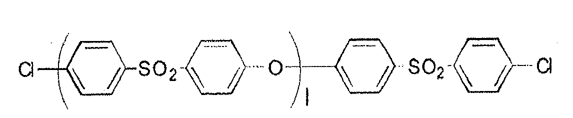 (Sumika Excel PES5200P manufactured by SUMITOMO CHEMICAL COMPANY, LTD., Mn=5.4×10⁴, Mw=1.2×10⁵), and 43.8 g (280.2 mmol) of 2,2'-bipyridyl, and the materials were stirred. Thereafter, a bath temperature was raised to 150 °C, toluene was heated to distill off, thereby, water in the system was azeotropy-dehydrated, and this was cooled to 60°C. Then, to this was added 73.4 g (266.9 mmol) of bis(1,5-cyclooctadiene)nickel (0), a temperature was raised to 80°C, and the mixture was stirred at the same temperature for 5 hours. After allowing to cool, the reaction solution was poured into a large amount of 6 mol/L hydrochloric acid, thereby, a polymer was precipitated, and filtered. Thereafter, a procedure of washing and filtration with 6 mol/L hydrochloric acid was repeated a few times, washing with water was performed until the filtrate became neutral, and this was dried under reduced pressure to obtain 16.3 g of a polymer electrolyte B which is the following objective polyarylene-based block copolymer. A structure of this polymer electrolyte B is shown below.

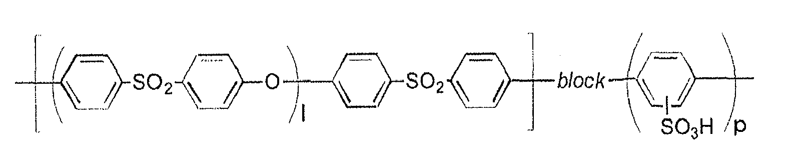

An ion exchange capacity of the resulting polymer electrolyte B was 2.3 meq/g, and a weight average molecular weight was 2.7×10⁵. And, l and p indicate an average polymerization degree of a repeating unit in a parenthesis constituting each block.

### Production Example 4 [Production of polymer electrolyte C]

Dipotassium 4,4'-difluorodiphenylsulfone-3,3'-disulfonate (7.74 g, 15.77 mmol), 3.00 g (13.14 mmol) of potassium 2,5-dihydroxybenzenesulfonate, and 1.91 g (13.80 mmol) of potassium carbonate were added, and 49 mL of DMSO and 35 mL of toluene were added. Thereafter, toluene was heated to distill off at a bath temperature of 150°C for 2 hours, thereby, water in the system was azeotropy-dehydrated and, thereafter, this was stirred for 4 hours while a temperature was retained, to obtain an oligomer a. An average of a repetition degree s of the oligomer a calculated from a charging value was 5.5.

Separately, to a flask equipped with an azeotropic distillation device were added 8.25 g (40.78 mmol) of 4,4'-dihydroxydiphenyl ether, 9.70 g (38.16 mmol) of 4,4'-difluorodiphenylsulfone, and 6.20 g (44.86 mmol) of potassium carbonate were added under argon atmosphere, and 82 mL of DMSO and 35 mL of toluene were added. Thereafter, toluene was heated to distill off at a bath temperature of 150°C for 2 hours, thereby, water in the system was azeotropy-dehydrated and, thereafter, this was stirred for 4 hours while a temperature was retained, thereby, an oligomer b was obtained. An average of a repetition degree r of the oligomer b calculated from a charging value was 15.0.

Subsequently, the reaction solution was sufficiently allowed to cool to room temperature, the reaction solution of the oligomer a was added dropwise to the reaction solution of the oligomer b, the reaction mass of the oligomer a was sufficiently co-washed with 20 mL of DMSO and, thereafter, this was stirred at an inner temperature of 150°C for 9 hours while a temperature was retained. The reaction solution was allowed to cool, and added dropwise to a large amount of hydrochloric acid, and the produced precipitation was filtered and recovered. Further, washing with water and filtration were repeated until the washing solution became neutral, and this was treated with hot water at 80°C, thereafter, dried at 80°C and a normal temperature to obtain 23.51 g of a polymer electrolyte C. A structure of this polymer electrolyte C is shown below.

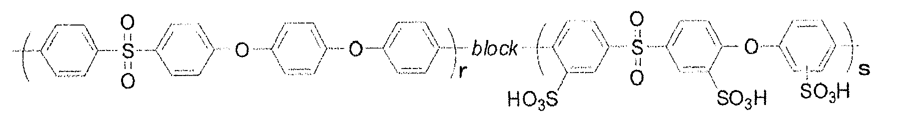

IEC of the resulting polymer electrolyte C was 1.5 meq/g, and a weight average molecular weight was 1.39×10⁵. And, r and s indicate that an average polymerization degree of a repeating unit in a parenthesis constituting each block.

### Production Example 5 [Synthesis of stabilizer polymer d]

### (Synthesis of polymer a)

A 2-L separable flask equipped with a reduced pressure azeotropic distillation device was replaced with nitrogen, and 63.40 g of bis-4-hydroxydiphenylsulfone, 70.81 g of 4,4'-dihydroxybiphenyl, and 955 g of N-methyl-2-pyrrolidone were added to a homogeneous solution. Thereafter, 92.80 g of potassium carbonate was added, and this was dehydrated under reduced pressure at 135°C to 150°C for 4.5 hours while NMP was distilled off. Thereafter, 200.10 g of dichlorodiphenylsulfone was added, followed by a reaction at 180°C for 21 hours.

After completion of the reaction, the reaction solution was added dropwise to methanol, and the precipitated solid was filtered and recovered. The recovered solid was further washed with methanol, washed with water, washed with hot methanol, and dried to obtain 275.55 g of a polymer a. A structure of this polymer a is shown below. A weight average molecular weight in terms of polystyrene of the polymer a as measured by GPC was 18000, and a ratio of k and l obtained from an integrated value of NMR measurement was k:1=7:3. An expression of the following "random" indicates that a structural unit forming the following polymer a is randomly copolymerized. And, k and q indicate an average polymerization degree of a repeating unit in a parenthesis, constituting this random polymer.

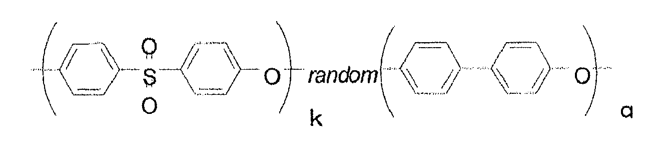

### (Synthesis of polymer b)

A 2-L separable flask was replaced with nitrogen, and 1014.12 g of nitrobenzene, and 80.00 g of the polymer a were added to a homogeneous solution. Thereafter, 50.25 g of N-bromosuccineimide was added, and this was cooled to 15°C. Subsequently, 106.42 g of 95% concentrated sulfuric acid was added dropwise over 40 minutes, followed by a reaction at 15°C for 6 hours. After 6 hours, 450.63 g of a 10 w% sodium hydroxide aqueous solution, and 18.36 g of sodium thiosulfate were added while cooling to 15°C. Thereafter, this solution was added dropwise to methanol, and the precipitate solid was filtered and recovered. The recovered solid was washed with methanol, washed with water, washed with methanol again, and dried to obtain 86.38 g of a polymer b.

### (Synthesis of polymer c)

A 2-L separable flask equipped with a reduced pressure azeotropic distillation device was replaced with nitrogen, and 116.99 g of dimethylformamide, and 80.07 g of the polymer b were added to a homogeneous solution. Thereafter, the solution was dehydrated under reduced pressure for 5 hours while dimethylformamide was distilled off. After 5 hours, this was cooled to 50°C, 41.87 g of nickel chloride was added, a temperature was raised to 130°C, and 69.67 g of triethyl phosphite was added dropwise, followed by a reaction at 140°C to 145°C for 2 hours. After 2 hours, 17.30 g of triethyl phosphite was further added, followed by a reaction at 145°C to 150°C for 3 hours. After 3 hours, the reaction solution was cooled to room temperature, a mixed solution of 1161 g of water and 929 g of ethanol was added dropwise, and the precipitated solid was filtered and recovered. To the recovered solid was added water, and this was sufficiently ground, washed with 5 w% hydrochloric acid, and washed with water to obtain 86.83 g of a polymer c.

### (Synthesis of polymer d)

A 5 L separable flask was replaced with nitrogen, and 1200 g of 35 w% hydrochloric acid, 550 g of water, and 75.00 g of the polymer c were added, followed by stirring at 105°C to 110°C for 15 hours. After 15 hours, the reaction was cooled to room temperature, and 1500 g of water was added dropwise. Thereafter, the solid in the system was filtered and recovered, and the resulting solid was washed with water, and washed with hot water. After drying, 72.51 g of an objective polymer d (following formula). A content rate of phosphorus obtained from elementary analysis was 5.91%, and a value of x calculated from this elementary analysis value was 1.6 (wherein x represents the number of phosphinic acid groups per one of a biphenylileneoxy group). This polymer d was used as a stabilizer.

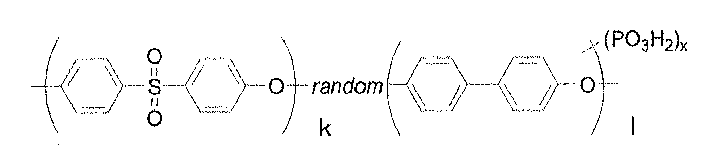

### Production Example 6 [Manufacturing of ion conductive membrane A]

The polymer electrolyte A obtained in Production Example 2 was dissolved in NMP (N-methyl-2-pyrrolidone) to a concentration of 13.5% by weight to prepare a polymer electrolyte solution. Then, this polymer electrolyte solution was added dropwise to a glass plate. Then, the polymer electrolyte solution was spread on the glass plate uniformly using a wire coater. Thereupon, using a wire coater of clearance of 0.25 mm, a coating thickness was controlled. After coating, the polymer electrolyte solution was dried at 80°C under a normal pressure. Then, the resulting membrane was immersed in 1 mol/L hydrochloric acid, washed with ion-exchanged water, and further dried at a normal temperature to obtain an ion conductive membrane A of a thickness of 30 µm.

### Production Example 7 [Production of polymer electrolyte D]

By the method according to Example 5 of JP-A No.2005-126684, a polymer electrolyte D shown by the following chemical formula was obtained. An ion exchange capacity of the resulting polymer electrolyte D was 1.4 meq/g, and a weight average molecular weight was 1.0×10⁵. And, m and n represent an average polymerization degree of a repeating unit in a parenthesis constituting each block.

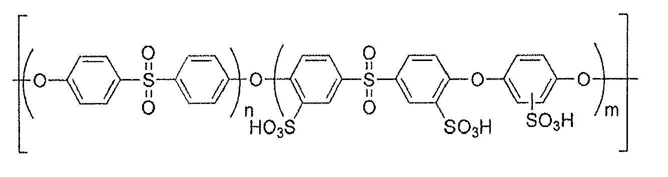

### Example 1 [Preparation of emulsion 1]

In 99 g of NMP, 0.9 g of the polymer electrolyte B obtained in Production Example 3 and 0.1 g of the stabilizer obtained in Production Example 5 were dissolved to prepare 100 g of a polymer electrolyte solution. Then, 100 g of this polymer electrolyte solution was added dropwise to 100 g of distilled water at an addition rate of 3 to 5 g/min to dilute the polymer electrolyte solution. The diluted solution was dialyzed with flowing water for 72 hours using a cellulose tube for dialysis membrane dialysis (UC36-32-100 manufactured by Sanko Junyaku Co., Ltd.: fraction molecular weight 14,000). The polymer electrolyte solution after dialysis was concentrated to a polymer electrolyte particle concentration of 1.5% by weight using an evaporator. Further, the polymer electrolyte solution after concentration was diluted 3 weight-fold with isopropyl alcohol to prepare an emulsion 1.

A zeta potential of this emulsion 1 was -240 mV, and an average particle diameter of the polymer electrolyte particle in the emulsion 1 was 350 nm. And, IEC of a solid material obtained by removing a volatile substance from the emulsion 1 was 2.4 meq/g.

Using the resulting emulsion 1, the following adherabiliy test and water resistance test were performed. Results are shown in Table 1.

### (Adhesion test)

The ion conductive membrane A obtained in Production Example 6 was used as a substrate for an adhesion test. The resulting emulsion 1 was used as an adhesive for the substrate for an adhesion test and an aluminum plate (1 mm). The substrate for an adhesion test was cut into a strip having a width of 20 mm and a length of 50 mm, and adhered to the aluminum plate using the emulsion 1 as an adhesive, with a length of 20 mm being as an overlap width. An amount of the used emulsion 1 is approximately 100 µL. After drying at 80°C for 10 minutes, peeling was performed with Autograph AGS-500 manufactured by Shimadzu Corporation at a peeling rate of 300 mm/min and a peeling angle of 90 degree, and a peeling load thereupon was obtained. A greater peeling load means that an adhering force is stronger.

### (Water resistance test)

The ion conductive membrane A obtained in Production Example 6 was used as a substrate for a water resistance test. The emulsion 1 was spread on a substrate for a water resistance test uniformly using a bar coater. Thereupon, a coating thickness was controlled, clearance being 25 µm. After coating, platinum-supported carbon (SA50BK, manufactured by N.E.Chemcat Corporation) was scattered on a coated membrane at a weight of about 10 mg/cm², and this was dried at 80°C under a normal pressure. The resulting membrane is a coated membrane in which the emulsion 1 and the platinum-supported carbon are complexed. After drying, the compressed air was blown through a nozzle to remove extra platinum-supported carbon. A weight of the platinum-supported carbon after removal was approximately 5 mg/cm².

Flowing water was fallen to this membrane, and an area ratio of the membrane which was removed by flow of flowing water was obtained, thereby, water resistance of the membrane was evaluated. As flowing water, flowing water released from a water tube having a tube diameter of 10 mm was used, this was fallen at a rate of 20 ml/sec from a position at a height of 100 mm, and the state of the membrane after 1 minute was investigated. As water resistance is higher, an area ratio of removal with flowing water is smaller. That is, it means that an area retaining rate of the membrane is greater.

### Examples 2 to 6

The emulsion 1 shown in Example 1 in which a zeta potential was adjusted with a sodium hydroxide aqueous solution as shown in Table 1 was prepared variously, and an adhesion test and a water resistance test were performed as in Example 1. Results are shown in Table 1 together with an adjusted zeta potential, and an average particle diameter.

### Example 7 [Preparation of emulsion 2]

According to the same manner as that of Example 1 except that the mixture of the polymer electrolyte b and the stabilizer used in Example 1 was substituted with the polymer electrolyte C obtained in Production Example 4, an emulsion 2 was obtained. A zeta potential, an average particle diameter, results of an adhesion test, and results of a water resistance test related to this emulsion 2 are shown in Table 1. IEC of a solid material obtained by removing a volatile substance from the emulsion 2 was 1.5 meq/g.

### Examples 8 to 11

The emulsion 2 shown in Example 7 in which a zeta potential was adjusted with a sodium hydroxide aqueous solution as in Table 1 was prepared variously, and an adhesion test and a water resistance test were performed as in Example 1. Results are shown in Table 1 together with an adjusted zeta potential, and an average particle diameter.

### Examples 12 to 14

The emulsion 1 shown in Example 1 in which a zeta potential was adjusted with NMP, DMSO (dimethyl sulfoxide) or DMF (dimethylformamide) as in Table 1 was prepared variously, and an adhesion test and a water resistance test were performed as in Example 1. Results are shown in Table 1 together with an adjusted zeta potential, and an average particle diameter.

### Comparative Example 1

According to the same manner as that of Example 1 except that a commercially available Nafion 5 w% solution (manufactured by Aldrich) was used in place of the emulsion 1, an adhesion test and a water resistance test were performed. Results are shown in Table 1.

**Table 1**

| | Polymer electrolyte emulsion | | | | | | Adhesion test (N) | Water resistance test Area retaining rate (%) |
|---|---|---|---|---|---|---|---|---|
| | Raw material emulsion | Zeta potential adjuster | | Zeta potential (mV) | PH | Particle diameter (nm) | | |
| | | Type of adjuster | Part (s) (*1) | | | | | |
| Example 1 | Emulsion 1 | - | - | -240 | 1.8 | 350 | 2.0 | 10 |
| Example 2 | Emulsion 1 | 0.1N NaOH | 1.0 | -219 | 3.0 | 400 | 2.0 | 10 |
| Example 3 | Emulsion 1 | 0.3N NaOH | 4.0 | -158 | 8.8 | 480 | 1.9 | 30 |
| Example 4 | Emulsion 1 | 0.3N NaOH | 4.5 | -124 | 11.0 | 550 | 1.8 | 70 |
| Example 5 | Emulsion 1 | 0.3N NaOH | 5,0 | -89 | 12.6 | 570 | 1.7 | 100 |
| Example 6 | Emulsion 1 | NaOH | 5.0 | -43 | 14.2 | 700 | 1.0 | 100 |
| Example 7 | Emulsion 2 | - | - | -192 | 2.1 | 300 | 2.0 | 9 |
| Example 8 | Emulsion 2 | NaOH | 0.5 | -92 | 11.5 | 450 | 1.8 | 90 |
| Example 9 | Emulsion 2 | 2.5N NaOH | 1.0 | -73 | 14.0 | 500 | 1.7 | 95 |
| Example 10 | Emulsion 2 | 2.5N NaOH | 5,0 | -20 | 14.5 | 600 | 0.3 | 100 |
| Example 11 | Emulsion 2 | 3.0N NaOH | 3.5 | -11 | 14.5 | 650 | 0.3 | 100 |
| Example 12 | Emulsion 1 | NMP | 7.0 | -130 | 3.2 | 550 | 2.0 | 100 |
| Example 13 | Emulsion 1 | DMSO | 20 | -120 | 3.4 | 560 | 2.0 | 100 |
| Example 14 | Emulsion 1 | DMF | 7.0 | -102 | 3.1 | 560 | 2.0 | 100 |
| Comparative Example 1 | 5 w% of Nafion | - | - | -35 | 2.0 | 400 | 0.2 | 100 |

| | | | | | | | | |
|---|---|---|---|---|---|---|---|---|
| (*1) Addition weight parts based on 100 parts by weight of emulsion | | | | | | | | |

As seen in Table 1, it was found out that, when a zeta potential is in a range of -50 mV to -300 mV, adhesion of the resulting membrane is high and, when a zeta potential is in a range of -50 mV to -150 mV, the resulting membrane has high water resistance.

### Example 15 [Preparation of polymer electrolyte emulsion 3]

In 99 g of N-methylpyrrolidone (NMP), 0.9 g of the polymer electrolyte B obtained in Production Example 3 and 0.1 g of the polymer d obtained in Production Example 5 were dissolved to prepare 100 g of a polymer electrolyte solution. This solution was gradually added dropwise to 900 g of water while stirring, to obtain a mixture of the polymer electrolyte A, NMP and water. This mixture was sealed with a permeation membrane, and washed with flowing water for 72 hours. Thereafter, this mixture was concentrated to 50 g using an evaporator to obtain a polymer electrolyte emulsion 3. An average particle diameter of this polymer electrolyte emulsion 3 was 101 µm. And, an amount of NMP in the polymer electrolyte emulsion 3 was 4 ppm (value measured by gas chromatography).

Using the resulting polymer electrolyte emulsion 3, the same adherability test as that of Example 1 was performed to obtain adhesion. Results are shown in Table 2.

### Example 16 [Preparation of polymer electrolyte emulsion 4]

According to the same manner except that the polymer electrolyte B was substituted with the polymer electrolyte C obtained in Preparation Example 4 in Example 15, a polymer electrolyte emulsion 4 was obtained. An average particle diameter of this polymer electrolyte emulsion was 281 nm. And, an amount of NMP in the polymer electrolyte emulsion 4 was 10 ppm (value measured by gas chromatography).

Using the resulting polymer electrolyte emulsion 4, the same adhesion test as that of Example 1 was performed to obtain adhesion. Results are shown in Table 2.

### Comparative Example 2

According to the same manner except that the polymer electrolyte B was substituted with the polymer electrolyte D obtained in Production Example 7 in Example 15, a polymer electrolyte emulsion 5 was obtained. An average particle diameter of this polymer electrolyte emulsion was 467 nm. And, an amount of NMR in the polymer electrolyte emulsion 5 was 4 ppm (value measured by gas chromatography).

Using the resulting polymer electrolyte emulsion 5, the same adhesion test as that of Example 1 was performed to obtain adhesion. Results are shown in Table 2.

**Table 2**

| | | IEC of solid material obtained by removing volatile substance fromemulsion (meq/g) | Peeling load (N) |
|---|---|---|---|
| Example 15 | Polymer electrolyte emulsion 3 | 2.4 | 2.0 |
| Example 16 | Polymer electrolyte emulsion 4 | 1.5 | 1.4 |
| Comparative Example 1 | Nafion 5 wt% solution | 0.9 | 0.2 |
| Comparative Example 2 | Polymer electrolyte emulsion 5 | 1.4 | 0.04 |

In Example 15 using the emulsion 3 having IEC of 2.4 meq/g, and Example 16 using the emulsion 4 having IEC of 1.5 meq/g, firm adhesion was obtained, but it was found out that a peeling load is low, and peeling easily occurs from the substrate in Comparative Examples 1 and 2 having low IEC.

## Claims

1. A polymer electrolyte emulsion, wherein a polymer electrolyte particle is dispersed in a dispersing medium, a zeta potential at the measurement temperature of 25°C being in a range of -50 mV to -300 mV.

2. The polymer electrolyte emulsion according to claim 1, wherein the zeta potential is in a range of -50 mV to -150 mV.

3. A polymer electrode emulsion obtained by dispersing a polymer electrolyte particle in a dispersing medium, and rendering a zeta potential at the measurement temperature of 25°C in a range of -50 mV to -300 mV with a zeta potential adjuster.

4. The polymer electrolyte emulsion according to claim 3, which is obtained by rendering the zeta potential in a range of -50 mV to -150 mV.

5. The polymer electrolyte emulsion according to any one of claims 1 to 4, wherein an ion exchange capacity of a solid material obtained by removing a volatile substance from the polymer electrode emulsion is 1.5 to 3.0 meq/g.

6. The polymer electrolyte emulsion according to any one of claims 1 to 4, wherein an ion exchange capacity of a solid material obtained by removing a volatile substance from the polymer electrode emulsion is 1.8 to 3.0 meq/g.

7. A polymer electrolyte emulsion, wherein a polymer electrolyte particle is dispersed in a dispersing medium, an ion exchange capacity of a solid material obtained by removing a volatile substance from the polymer electrolyte emulsion being 1.5 to 3.0 meq/g.

8. The polymer electrolyte emulsion according to claim 7, wherein the ion exchange capacity is 1.8 to 3.0 meq/g.

9. The polymer electrolyte emulsion according to any one of claims 1 to 8, wherein a volume average particle diameter obtained by a dynamic light scattering method is 100 nm to 200 µm.

10. The polymer electrolyte emulsion according to any one of claims 1 to 9, wherein a polymer electrolyte constituting the polymer electrolyte particle comprises a polymer electrolyte having a weight average molecular weight in terms of polystyrene measured by gel permeation chromatography of 1000 to 1000000.

11. The polymer electrolyte emulsion according to any one of claims 1 to 10, wherein a polymer electrolyte constituting the polymer electrolyte particle comprises an aromatic hydrocarbon polymer electrolyte.

12. The polymer electrolyte emulsion according to any one of claims 1 to 11, wherein a content of a good solvent for a polymer electrolyte constituting the polymer electrolyte particle is 200 ppm or less.

13. The polymer electrolyte emulsion according to any one of claims 1 to 12, which is used for an electrode of a polymer electrolyte fuel cell.

14. A catalyst composition comprising the polymer electrolyte emulsion according to any one of claims 1 to 12, and a catalyst component.

15. An electrode for a polymer electrolyte fuel cell formed by the catalyst composition according to claim 14.

16. A membrane electrode assembly having the electrode for a polymer electrolyte fuel cell according to claim 15.

17. A polymer electrolyte fuel cell having the membrane electrode assembly according to claim 16.
